# FASCICULE DE BREVET EUROPEEN

(11) **EP 3 894 735 B1**
(45) Date de publication et mention de la délivrance du brevet: **07.08.2024**
(21) Numéro de dépôt: 19842385.7
(22) Date de dépôt: 04.12.2019
(51) Int. Cl.: F17C 13/00

(54) **DISPOSITIF DE SUPPORT ET CONTENEUR DE STOCKAGE DE GAZ LIQUÉFIÉ**
STÜTZVORRICHTUNG UND LAGERBEHÄLTER FÜR FLÜSSIGGAS
SUPPORT DEVICE AND STORAGE CONTAINER FOR LIQUEFIED GAS

(30) Priorité: 11.12.2018 FR 1872652
(43) Date de publication de la demande: 20.10.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FOURNEL, Jean-Luc, 38360 SASSENAGE (FR)
(74) Mandataire: Air Liquide
(86) Numéro de dépôt international: PCT/FR2019/052923
(87) Numéro de publication internationale: WO 2020/120877

(56) Documents cités:
- WO-A1-2005/100210
- WO-A1-2017/190846
- WO-A1-2017/198629
- FR-A- 1 548 099
- US-A- 6 029 456

## Description

L'invention concerne les conteneurs de stockage de fluides cryogéniques. Un tel conteneur est connu de US6029456A.

L'invention concerne plus particulièrement un conteneur conforme au préambule de la revendication 1.

Les supports internes fixes de matériels cryogéniques sont communément appelés « cols fixes » dans le domaine des récipients cryogéniques fixes ou mobiles ou « points fixes » ou « barrières à vide » dans le domaine des cryostats (boite à vannes, boites froides, lignes sous vide de transfert,..).

L'invention s'applique en particulier aux conteneurs de stockage (et le cas échéant de transport) de fluides cryogéniques tels que de l'hélium.

Ces supports internes fixes bloquent en déplacement un élément froid (réservoir ou tuyauterie ou tout autre équipement) par rapport à un élément structurel externe plus chaud. Ces supports reprennent les efforts soumis à ces équipements internes (poids propre, effet de fond dû à la pression, accélération de transport, de manutention et/ou de séisme...). La conception de ces supports internes fixes est un compromis entre une grande résistance mécanique et des pertes thermiques minimum.

Par exemple, les réservoirs cryoqéniques à double enveloppes comportent un col fixe qui permet de supporter, dans le réservoir externe, le réservoir interne de stockage (et un éventuel écran thermique tel qu'une qarde d'azote). Le col fixe reprend également les efforts dynamiques. Il bloque les déplacements axiaux du réservoir interne (et de la garde azote le cas échéant).

Le support fixe (col fixe) doit être dimensionné pour reprendre par exemple une accélération de 2g axiale en mode transport et de 4g verticale lors des manutentions. Pour les conteneurs agréés pour le transport ferroviaire, le support fixe doit également être dimensionné pour supporter une accélération de 4.5g axiale lors de tamponnage des wagons. Dans ce cas de charge, le support fixe est soumis à un effort de 74 tonnes.

Le support fixe est classiquement conçu comme les barrières à vide avec des viroles (tubes) concentriques de faible épaisseur permettant d'obtenir un long chemin thermique entre les deux éléments à des températures différentes.

Généralement, les pertes thermiques acceptables par le support fixe sont de l'ordre de 10W dans le cas d'un écran thermique formé par une garde d'azote et 0,5 W pour le réservoir interne contenant de l'hélium.

Pour des conditions extrêmes de très fortes charges et de pertes thermiques faibles, la conception couramment utilisée comprend une des viroles du chemin thermique en composite époxy/verre. Cette paroi en matériau composite époxy/verre a de bonnes caractéristiques mécaniques, une faible conductivité et un bon comportement à froid.

Dans les architectures connues, le réservoir interne et l'éventuel écran thermique sont supportés par des tirants radiaux relié au réservoir externe. La liaison fixe n'assurant dans cette configuration que la reprise des efforts axiaux.

La virole époxy/verre est solidarisée aux pièces adjacentes par collage. Ce collage est cependant difficile à maîtriser en production.

De plus, cette paroi composite a une ductilité ou possibilité d'allongement faible ou nulle (la limite élastique est très proche de la rupture) . Ainsi, en cas de choc ou de surcharge accidentelle, la virole composite ne peut pas absorber cette surcharge par déformation plastique. Ce manque d'adaptabilité conduit à la rupture de la virole et nuit à la fiabilité de l'équipement.

De plus, cette structure ne peut pas reprendre d'importants moments de flexion (limitation de la contrainte de peau) ce qui rend nécessaire un système de supportage supplémentaire (tirants par exemple dans le cas des conteneurs).

Un but de la présente invention est de pallier tout ou partie des inconvénients de l'art antérieur relevés ci-dessus.

A cette fin, le dispositif selon l' invention est caractérisé en ce que l'ensemble de parois formant des aller-retours selon la direction longitudinale de la liaison fixe et rigide comprend au moins une paroi constituée de titane.

Par ailleurs, des modes de réalisation de l'invention peuvent comporter l'une ou plusieurs des caractéristiques suivantes :
- la au moins une paroi constituée de titane a une épaisseur comprise entre 1mm et 5 mm et notamment égale à 3mm,
- la au moins une paroi constituée de titane est une paroi tubulaire,
- l'ensemble de parois formant des aller-retours selon la direction longitudinale comprend au moins une paroi en acier inoxydable et notamment deux parois en acier inoxydable disposées en série et formant respectivement un aller-retour selon la direction longitudinale,
- la au moins une paroi constituée de titane est constituée de l'un au moins des matériaux parmi : TA6V ELI, Ti-5Al-2.5Sn ELI, Ti 6Al 2Zn 4Zr 2Mo et TA6V,

L'invention concerne un conteneur de stockage de gaz liquéfié, notamment de fluide cryogénique tel que de l'hélium, comprenant un premier réservoir interne s'étendant selon une direction longitudinale et destiné à stocker le gaz liquéfié, un second réservoir externe disposé autour du premier réservoir avec un espacement isolé sous vide entre le premier et le second réservoir, le conteneur comprenant un dispositif de support du premier réservoir dans le second réservoir, ledit dispositif de support étant conforme à l'une quelconque des caractéristiques ci-dessus ou ci-dessous.

Selon d'autres particularités possibles :
- le dispositif de maintien du premier réservoir dans le second réservoir comprend deux parois en acier inoxydable disposés en série dans le chemin thermique entre les deux réservoirs et formant respectivement un aller-retour selon la direction longitudinale, les deux parois en acier inoxydable étant disposées en série entre le second réservoir et un élément intermédiaire du conteneur, le dispositif de maintien du premier réservoir dans le second réservoir comprenant en outre au moins une paroi en titane disposée en série, entre l'élément intermédiaire du conteneur et le premier réservoir ou un élément structurel solidaire du premier réservoir,
- les deux extrémités longitudinales de la au moins une paroi en titane sont fixées respectivement à l'élément intermédiaire du conteneur et à un élément structurel solidaire du premier réservoir,

- une extrémité longitudinale de la au moins une paroi en titane est fixée à l'élément structurel solidaire du premier réservoir, ledit élément structurel étant un col tubulaire solidaire du premier réservoir,
- l'élément intermédiaire du conteneur comprend un écran thermique disposé entre le premier et le second réservoir,
- l'écran thermique est refroidi par un fluide cryogénique, notamment en contenant une réserve de fluide cryogénique,
- le conteneur comprend (ou non) un ensemble de tirants ayant une première extrémité reliée au second réservoir et une seconde extrémité reliée rigidement au premier réservoir et/ou à l'élément intermédiaire.

L'invention peut concerner également tout dispositif alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles
[Fig. 1] représente une vue en coupe, schématique et partielle, illustrant un exemple de structure de dispositif support dans le cas d'un conteneur,
[Fig. 2] représente une vue similaire à celle de la [Fig. 1] en version simplifiée,
[Fig. 3] représente une vue en coupe longitudinale, schématique et partielle, illustrant un exemple de conteneur ou réservoir pouvant comporter un tel dispositif de support.

Un exemple de dispositif de support va à présent être décrit dans l'application d'un conteneur ou réservoir cryogénique. Comme mentionné ci-dessus, cet exemple n'est nullement limitatif. Tout ou partie de la structure du support décrite peut être utilisée dans autres applications pour le support d'un premier équipement dans ou sur un second équipement.

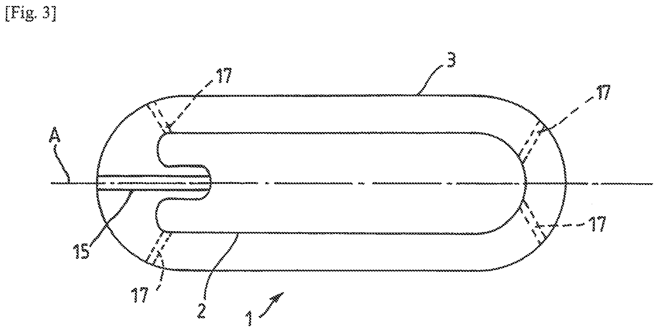

Le conteneur de stockage de gaz liquéfié illustré à la [Fig. 3] est configuré pour stocker un fluide cryogénique tel que de l'hélium par exemple.

Le conteneur comprend un premier réservoir 2 interne, par exemple cylindrique, s'étendant selon une direction A longitudinale et destiné à stocker le gaz liquéfié et un second réservoir 3 externe disposé autour du premier réservoir 2 avec un espacement isolé sous vide entre le premier 2 et le second 3 réservoir. En position d'utilisation, la direction longitudinale du conteneur est horizontale. C'est-à-dire que le conteneur est du type horizontal.

Le conteneur 1 comprend à une de ses extrémités longitudinales un dispositif 15 de support du premier 2 réservoir interne dans le second réservoir 3 externe.

Le dispositif 15 de support comprend une liaison fixe et rigide s'étendant selon une direction longitudinale A entre d'une part, une extrémité du réservoir externe et, d'autre part, une extrémité adjacente du réservoir interne 2. C'est-à-dire que, en configuration d'utilisation du conteneur 1, le dispositif 15 de support forme une liaison mécanique horizontale qui maintient le premier réservoir 2 dans le second 3 réservoir au niveau d'une extrémité longitudinale (type porte-à-faux par exemple).

Cette liaison fixe et rigide comprend un ensemble de parois 4, 5, 6, 7, par exemple tubulaires, constituant un chemin thermique d'isolation formant des aller-retours selon la direction longitudinale A entre d'une part, le second réservoir 3 et le premier réservoir 2.

L'ensemble de parois formant des aller-retours selon la direction longitudinale A de la liaison 15 fixe et rigide comprend au moins une paroi 6 constituée de titane. C'est-à-dire que la paroi (virole) en matériau composite époxy/verre) de l'art antérieur peut être remplacée par une paroi 6 en titane.

La nuance de titane utilisée peut être la nuance TA6V ELI. D'autres nuances peuvent être utilisées, par exemple Ti-5Al-2.5Sn ELI, Ti 6Al 2Zn 4Zr 2Mo et TA6V (mais pour ce dernier de préférence limité à une utilisation jusqu'à 80K).

Cette paroi 6 en titane peut avoir une épaisseur comprise entre 1 mm et 5 mm et notamment 3mm.

La nuance TA6V ELI permet de conférer à la paroi 6 en titane un allongement possible de 5% environ à la température de 4K.

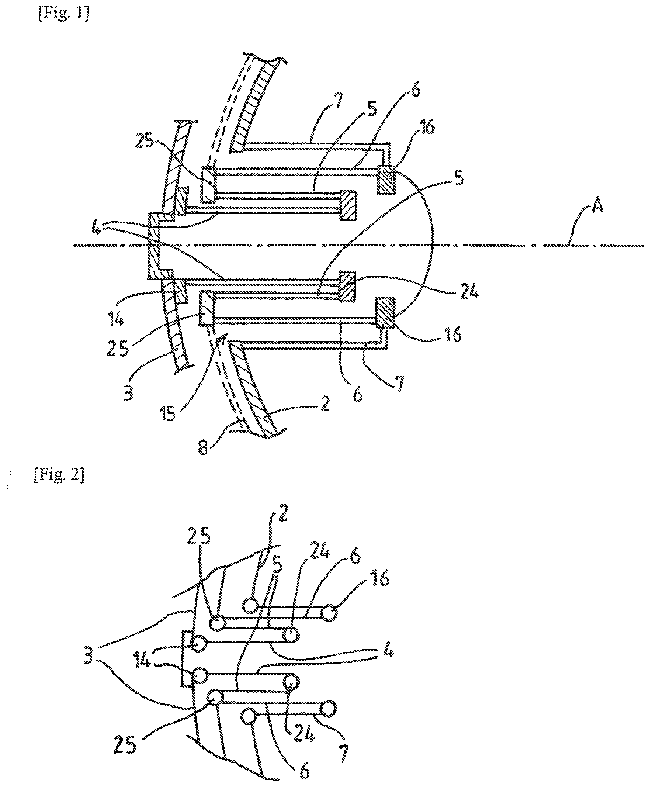

Dans l'exemple des [Fig. 1] et [Fig. 2], le conteneur comprend un écran thermique 8, 25 interposé entre les le premier 2 et le second 3 réservoir. L'écran thermique 8, 25 peut être une paroi refroidie par une réserve de fluide froid (azote par exemple). De même, l'écran thermique 8 peut être une paroi creuse qui contient le fluide froid de refroidissement (par exemple un volume de stockage délimité par deux parois tubulaires).

Dans l'exemple des [Fig. 1] et [Fig. 2], le dispositif de support comprend deux parois ou viroles 4, 5 en acier inoxydable. Ces deux parois 4, 5 peuvent avoir une épaisseur comprise entre 1mm et 6mm, et notamment 5mm. Ces deux parois 4, 5 forment la première partie du chemin thermique entre le second réservoir 3 (à la température extérieure par exemple de 300K environ) et l'écran thermique 8, 25 (à une température d'environ 80K par exemple).

La paroi 6 en titane (virole) suivante relie l'écran thermique 8, 25 au premier réservoir 2 interne (dont la température peut être de l'ordre de 4K).

Les extrémités des deux viroles 4, 5 en acier peuvent être solidarisées aux autres pièces de la liaison via des anneaux ou brides 14, 24 soudées à chacune de leurs extrémités. Par exemple une première bride 14 assure la liaison d'une première extrémité (« externe ») de la première paroi 4 avec le second réservoir 3 extérieur ou un élément qui lui est solidaire. Une second bride 24 assure la liaison d'une seconde extrémité (« interne) de la première paroi 4 avec une première extrémité (« interne ») de la seconde paroi 5 en acier.

La seconde extrémité (« externe ») de la seconde paroi 5 peut être reliée à la première extrémité (« externe ») de la paroi 6 en titane via une bride 25.

Enfin, la seconde extrémité (« interne ») de la paroi 6 en titane peut être reliée à une extrémité (« interne ») d'un col 7 tubulaire solidaire du premier 2 réservoir.

Les qualificatif « externe » et « interne » se réfèrent aux positions relatives respectivement par rapport au centre du conteneur selon la direction longitudinale A. Les parois 4, 5, 6, 7 du dispositif support forment des aller-retours interne/externe concentriques pour constituer un chemin thermique d'isolation entre les deux réservoirs 3, 2.

Les extrémités de la paroi 6 en titane peuvent être fixées par un assemblage visé et/ou par soudage.

Le titane possède des caractéristiques mécaniques très élevés avec un coefficient de conductivité thermique deux fois plus faible que l'inox. Ces deux propriétés combinées à l'architecture du dispositif support permettent de concevoir un dispositif de support ayant une performance thermique équivalentes aux dispositifs utilisant une virole en matériau composite.

Cette architecture confère une tenue suffisante du premier réservoir 2 dans le second réservoir 3 permettant de s'affranchir de tirants 17 notamment à l'extrémité longitudinale du conteneur qui est opposée au dispositif support 15 (cf. [Fig. 3]).

C'est-à-dire que le dispositif 15 de maintien peut assurer le maintien et la tenue aussi du premier réservoir 2 (et de l'écran thermique 8) aussi si bien pour les mouvements axiaux (direction longitudinale A) que les mouvements latéraux.

Cette éventuelle suppression des tirants 17 permet de simplifier la conception, réduit les coûts et améliore l'isolation des réservoirs (notamment par la suppression de défauts d'isolation au niveau de zones d'accrochage internes).

Selon l'invention, les risques de rupture fragile en cas de choc ou de surcharge accidentelle (fiabilisation des conteneurs) sont supprimés ou nettement diminués.

Bien entendu l'invention n'est pas limitée à l'exemple de réalisation décrit ci-dessus. En particulier, le dispositif de support peut comporter un nombre différent de parois formant un chemin thermique via des aller-retours. Par exemple, le dispositif support peut comporter une, deux ou plus de deux parois en acier et une, deux ou plus de deux parois en titane. Plus les performances d'isolation sont importantes plus le nombre d'aller-retour pourra être élevé. De même, l'ordre de disposition des parois (acier et titane) pourra être adaptée entre les deux équipements à relier.

Ainsi selon une particularité avantageuse, la liaison rigide est de préférence composée d'acier inoxydable et de titane et ne comprend pas de résine, notamment époxy.

Le dispositif 15 support peut s'étendre longitudinalement sur l'axe longitudinal central du conteneur comme représenté à la [fig.3].

Bien entendu, le dispositif 15 support peut s'étendre longitudinalement horizontalement dans un autre plan que le plan de l'axe longitudinal central du conteneur 1.

## Revendications

1. Conteneur de stockage de gaz liquéfié, notamment de fluide cryogénique tel que de l'hélium, comprenant un premier réservoir (2) interne s'étendant selon une direction (A) longitudinale et destiné à stocker le gaz liquéfié, un second réservoir (3) externe disposé autour du premier réservoir (2) avec un espacement isolé sous vide entre le premier (2) et le second (3) réservoir, le conteneur (1) comprenant un dispositif (15) de support du premier (2) réservoir dans le second réservoir (3), le premier (2) réservoir étant destiné à être maintenu à une température cryogénique tandis que le second réservoir (3) est destiné à être maintenu à une température supérieure à la température du premier (2) réservoir, le dispositif (15) de support comprenant une liaison fixe et rigide s'étendant selon une direction longitudinale (A) entre d'une part, une extrémité du second réservoir (3) et, d'autre part, une extrémité adjacente du premier réservoir (2), la liaison fixe et rigide comprenant un ensemble de parois (4, 5, 6, 7) formant des aller-retours selon la direction longitudinale (A) pour constituer un chemin thermique d'isolation entre d'une part, le second réservoir (3) et, d'autre part, le premier (2) réservoir, **caractérisé en ce que** la direction longitudinale est horizontale et **en ce que** l'ensemble de parois formant des aller-retours selon la direction longitudinale (A) de la liaison fixe et rigide comprend au moins une paroi (6) constituée de titane.

2. Conteneur selon la revendication 1, **caractérisé en ce que** la au moins une paroi (6) constituée de titane a une épaisseur comprise entre 1mm et 5 mm et notamment égale à 3mm.

3. Conteneur selon la revendication 1 ou 2, **caractérisé en ce que** la au moins une paroi (6) constituée de titane est une paroi tubulaire.

4. Conteneur selon l'une quelconque des revendications 1 à 3, **caractérisé en ce que** l'ensemble de parois (4, 5, 6, 7) formant des aller-retours selon la direction longitudinale (A) comprend au moins une paroi (4, 5) en acier inoxydable et notamment deux parois (4, 5) en acier inoxydable disposées en série et formant respectivement un aller-retour selon la direction longitudinale (A).

5. Conteneur selon l'une quelconque des revendications 1 à 4, **caractérisé en ce que** la au moins une paroi (6) constituée de titane est constituée de l'un au moins des matériaux parmi : TA6V ELI, Ti-5Al-2.5Sn ELI, Ti 6Al 2Zn 4Zr 2Mo et TA6V.

6. Conteneur selon l'une quelconque des revendications 1 à 6, **caractérisé en ce que** les extrémités de la au moins une paroi (6) constituée de titane sont fixées par vissage ou soudage à des éléments adjacents (25, 16) respectifs de la liaison fixe.

7. Conteneur selon l'une quelconque des revendications 1 à 6, **caractérisé en ce que** le dispositif (15) de maintien du premier (2) réservoir dans le second réservoir (3) comprend deux parois (4, 5) en acier inoxydable disposés en série dans le chemin thermique entre les deux réservoirs (2, 3) et formant respectivement un aller-retour selon la direction longitudinale (A), les deux parois (4, 5) en acier inoxydable étant disposées en série entre le second réservoir (3) et un élément (8, 25) intermédiaire du conteneur, le dispositif (15) de maintien du premier (2) réservoir dans le second réservoir (3) comprenant en outre au moins une paroi (6) en titane disposée en série, entre l'élément (8, 25) intermédiaire du conteneur et le premier réservoir (2) ou un élément structurel (7) solidaire du premier réservoir (2).

8. Conteneur selon la revendication 7, **caractérisé en ce que** les deux extrémités longitudinales de la au moins une paroi (6) en titane sont fixées respectivement à l'élément (8, 25) intermédiaire du conteneur et à un élément structurel (7) solidaire du premier réservoir (2).

9. Conteneur selon la revendication 8, **caractérisé en ce qu'**une extrémité longitudinale de la au moins une paroi (6) en titane est fixée à l'élément structurel (7) solidaire du premier réservoir (2), ledit élément structurel (7) étant un col tubulaire solidaire du premier réservoir (2).

10. Conteneur selon l'une quelconque des revendications 7 à 9, **caractérisé en ce que** l'élément (8, 25) intermédiaire du conteneur comprend un écran thermique disposé entre le premier (2) et le second (3) réservoir.

11. Conteneur selon la revendication 10, **caractérisé en ce que** l'écran thermique (8, 25) est refroidi par un fluide cryogénique, notamment en contenant une réserve de fluide cryogénique.

## Patentansprüche

1. Behälter zum Speichern von verflüssigtem Gas, insbesondere von kryogenem Fluid wie Helium, umfassend eine inneren ersten Tank (2), der sich entlang einer Längsrichtung (A) erstreckt und dazu bestimmt ist, das verflüssigte Gas zu speichern, einen äußeren zweiten Tank (3), der um den ersten Tank (2) herum mit einem isolierten Zwischenraum unter Vakuum zwischen dem ersten (2) und dem zweiten (3) Tank angeordnet ist, wobei der Behälter (1) eine Vorrichtung (15) zum Stützen des ersten (2) Tanks in dem zweiten Tank (3) umfasst, wobei der erste (2) Tank dazu bestimmt ist, auf einer kryogenen Temperatur gehalten zu werden, während der zweite Tank (3) dazu bestimmt ist, auf einer Temperatur über der Temperatur des ersten (2) Tanks gehalten zu werden, wobei die Vorrichtung (15) zum Stützen eine feststehende und starre Verbindung umfasst, die sich entlang einer Längsrichtung (A) zwischen einerseits einem Ende des zweiten Tanks (3) und anderseits einem benachbarten Ende des ersten Tanks (2) erstreckt, wobei die feststehende und starre Verbindung eine Anordnung aus entlang der Längsrichtung (A) hin und her gehenden Wänden (4, 5, 6, 7) umfasst, um einen thermischen Isolationsweg zwischen einerseits dem zweiten Tank (3) und andererseits dem ersten (2) Tank zu bilden, **dadurch gekennzeichnet, dass** die Längsrichtung horizontal verläuft und dass die Anordnung aus entlang der Längsrichtung (A) hin und her gehenden Wänden der feststehenden und starren Verbindung mindestens eine aus Titan bestehende Wand (6) umfasst.

2. Behälter nach Anspruch 1, **dadurch gekennzeichnet, dass** die mindestens eine aus Titan bestehende Wand (6) eine Dicke zwischen 1 mm und 5 mm und insbesondere von 3 mm hat.

3. Behälter nach Anspruch 1 oder 2, **dadurch gekennzeichnet, dass** die mindestens eine aus Titan bestehende Wand (6) eine rohrförmige Wand ist.

4. Behälter nach einem der Ansprüche 1 bis 3, **dadurch gekennzeichnet, dass** die Anordnung aus entlang der Längsrichtung (A) hin und her gehenden Wänden (4, 5, 6, 7) mindestens eine Wand (4, 5) aus nichtrostendem Stahl umfasst und insbesondere zwei Wände (4, 5) aus nichtrostendem Stahl, die in Reihe angeordnet sind und jeweils entlang der Längsrichtung (A) hin und her gehen.

5. Behälter nach einem der Ansprüche 1 bis 4, **dadurch gekennzeichnet, dass** die mindestens eine aus Titan bestehende Wand (6) aus mindestens einem der Materialien besteht unter: TA6V ELI, Ti-5Al-2.5Sn ELI, Ti 6Al 2Zn 4Zr 2Mo und TA6V.

6. Behälter nach einem der Ansprüche 1 bis 6, **dadurch gekennzeichnet, dass** die Enden der mindestens einen aus Titan bestehenden Wand (6) durch Schrauben oder Schweißen an jeweiligen benachbarten Elementen (25, 16) der feststehenden Verbindung befestigt sind.

7. Behälter nach einem der Ansprüche 1 bis 6, **dadurch gekennzeichnet, dass** die Vorrichtung (15) zum Halten des ersten (2) Tanks in dem zweiten Tank (3) zwei Wände (4, 5) aus nichtrostendem Stahl umfasst, die in Reihe in dem thermischen Weg zwischen den beiden Tanks (2, 3) angeordnet sind und entlang der Längsrichtung (A) hin und her gehen, wobei die beiden Wände (4, 5) aus nichtrostendem Stahl in Reihe zwischen dem zweiten Tank (3) und einem Zwischenelement (8, 25) des Behälters angeordnet sind, wobei die Vorrichtung (15) zum Halten des ersten (2) Behälters in dem zweiten Behälter (3) ferner mindestens eine Wand (6) aus Titan umfasst, die in Reihe angeordnet ist, zwischen dem Zwischenelement (8, 25) des Behälters und dem ersten Tank (2) oder einem strukturellen Element (7), das mit dem ersten Tank (2) fest verbunden ist.

8. Behälter nach Anspruch 7, **dadurch gekennzeichnet, dass** die beiden Längsenden der mindestens einen Wand (6) aus Titan an dem Zwischenelement (8, 25) des Behälters beziehungsweise an einem strukturellen Element (7), das mit dem ersten Tank (2) fest verbunden ist, befestigt sind.

9. Behälter nach Anspruch 8, **dadurch gekennzeichnet, dass** ein Längsende der mindestens einen Wand (6) aus Titan an dem strukturellen Element (7) befestigt ist, das mit dem ersten Tank (2) fest verbunden ist, wobei das strukturelle Element (7) ein rohrförmiger Hals ist, der mit dem ersten Tank (2) fest verbunden ist.

10. Behälter nach einem der Ansprüche 7 bis 9, **dadurch gekennzeichnet, dass** das Zwischenelement (8, 25) des Behälters einen thermischen Schild umfasst, der zwischen dem ersten (2) und dem zweiten (3) Tank angeordnet ist.

11. Behälter nach Anspruch 10, **dadurch gekennzeichnet, dass** der thermische Schild (8, 25) durch ein kryogenes Fluid gekühlt wird, insbesondere, indem er einen Vorrat an kryogenem Fluid enthält.

## Claims

1. Container for storing liquefied gas, in particular cryogenic fluid such as helium, comprising a first, inner tank (2) extending in a longitudinal direction (A) and intended to store the liquefied gas, a second, outer tank (3) arranged around the first tank (2) with a vacuum insulated spacing between the first (2) and the second (3) tank, the container (1) comprising a device (15) for supporting the first tank (2) in the second tank (3), the first tank (2) being intended to be maintained at a cryogenic temperature while the second tank (3) is intended to be maintained at a temperature higher than the temperature of the first tank (2), the support device (15) comprising a fixed and rigid connection extending in a longitudinal direction (A) between, on the one hand, one end of the second tank (3) and, on the other hand, an adjacent end of the first tank (2), the fixed and rigid connection comprising a set of walls (4, 5, 6, 7) forming back-and-forths in the longitudinal direction (A) so as to constitute a thermal insulation path between, on the one hand, the second tank (3) and, on the other hand, the first tank (2), **characterized in that** the longitudinal direction is horizontal and **in that** the set of walls forming back-and-forths in the longitudinal direction (A) of the fixed and rigid connection comprises at least one wall (6) made of titanium.

2. Container according to Claim 1, **characterized in that** the at least one wall (6) made of titanium has a thickness of between 1 mm and 5 mm and in particular equal to 3 mm.

3. Container according to Claim 1 or 2, **characterized in that** the at least one wall (6) made of titanium is a tubular wall.

4. Container according to any one of Claims 1 to 3, **characterized in that** the set of walls (4, 5, 6, 7) forming back-and-forths in the longitudinal direction (A) comprises at least one stainless steel wall (4, 5) and in particular two stainless steel walls (4, 5) arranged in series and respectively forming a back-and-forth in the longitudinal direction (A).

5. Container according to any one of Claims 1 to 4, **characterized in that** the at least one wall (6) made of titanium consists of at least one of the materials among: TA6V ELI, Ti-5Al-2.5Sn ELI, Ti 6Al 2Zn 4Zr 2Mo and TA6V.

6. Container according to any one of Claims 1 to 6, **characterized in that** the ends of the at least one wall (6) made of titanium are fixed by screwing or welding to respective adjacent elements (25, 16) of the fixed connection.

7. Container according to any one of Claims 1 to 6, **characterized in that** the device (15) for holding the first tank (2) in the second tank (3) comprises two stainless steel walls (4, 5) arranged in series in the thermal path between the two tanks (2, 3) and respectively forming a back-and-forth in the longitudinal direction (A), the two stainless steel walls (4, 5) being arranged in series between the second tank (3) and an intermediate element (8, 25) of the container, the device (15) for holding the first tank (2) in the second tank (3) further comprising at least one titanium wall (6) arranged in series, between the intermediate element (8, 25) of the container and the first tank (2) or a structural element (7) secured to the first tank (2).

8. Container according to Claim 7, **characterized in that** the two longitudinal ends of the at least one titanium wall (6) are respectively fixed to the intermediate element (8, 25) of the container and to a structural element (7) secured to the first tank (2).

9. Container according to Claim 8, **characterized in that** one longitudinal end of the at least one titanium wall (6) is fixed to the structural element (7) secured to the first tank (2), said structural element (7) being a tubular neck secured to the first tank (2).

10. Container according to any one of Claims 7 to 9, **characterized in that** the intermediate element (8, 25) of the container comprises a heat shield arranged between the first (2) and the second (3) tank.

11. Container according to Claim 10, **characterized in that** the heat shield (8, 25) is cooled by a cryogenic fluid, in particular containing a reserve of cryogenic fluid.
